# EUROPEAN PATENT SPECIFICATION

(11) **EP 4 542 105 B1**
(45) Date of publication and mention of the grant of the patent: **24.12.2025**
(21) Application number: 24181252.8
(22) Date of filing: 10.06.2024
(51) Int. Cl.: F21S 6/00, F16B 12/22, F16B 12/34, F21V 17/00, F21V 17/12, F21V 17/14, F21V 21/06, F16B 9/02, F16B 9/00, F21V 17/16

(54) **LIGHT FITTING**
LEUCHTE
LUMINAIRE

(30) Priority: 20.10.2023 GB 202316124; 28.05.2024 GB 202407534
(43) Date of publication of application: 23.04.2025
(73) Proprietor: Astro Lighting Limited, Harlow Essex CM20 2GJ (GB)
(72) Inventor: Bella, Salvatore, London, E10 5DY (GB)
(74) Representative: Lawrence, Malcolm Graham

(56) References cited:
- EP-B1- 1 250 073
- CA-A1- 2 109 288
- DE-A1- 3 414 845
- DE-C2- 3 244 516
- US-A- 1 557 526
- US-A1- 2007 183 160

## Description

The present invention relates to lighting, lighting systems, portable lights, freestanding lights, wall or ceiling mounted lights, luminaires and the like, collectively referred to herein as light fittings. More particularly, the invention relates to lighting systems that may require assembly from, for example, a flat-pack or other disassembled or partially disassembled state, to commission the light. The invention further relates to apparatus and methods for the assembly of light fittings.

Lighting systems are often too large or cumbersome to be supplied in a fully assembled form, in which case they may be disassembled, or partially disassembled, with instructions provided for a consumer to assemble and commission the light. There are commonly metallic structures (or a mix of different materials) that must be connected together to provide a support for such items as a bulb or shade. Such structures can involve multiple component parts and be fairly complex. It is therefore helpful to the consumer to make the process of assembly simple and straightforward, whilst also providing for a strong and stable structure.

It is commonplace for threaded fixing elements to be used to fasten different elements of the lighting structure together, in particular to mount to a base in an orthogonal upstanding orientation a stem of a luminaire which carries a lamp head fitted with a bulb to provide illumination. Such threaded fixing elements may include screws or bolts, cam-lock fasteners, or other similar articles whose deployment can be challenging for a consumer, especially if elderly or infirm.

In CA 2 109 288 A1 rotational adjustment of a partially installed post relative to a support base addresses what would otherwise be aesthetic mismatch between various pairings of pedestal and post involved in combining different modular components for ornamental lighting assemblies. An arcuate slot is disposed slidably to receive a shank of a threaded fixing and engage it in a fixed position chosen to avoid the mismatch. Fixing is achieved using a washered hex-head screw/bolt rather than a countersunk screw and there is no reference to the document to the use of a fixed to surface indented by a countersinking.

P 1 250 073 B1 addresses instability in display systems. A tube is assembled to a base plate and mounting plate by aligning a base plate hole with a central opening in the mounting plate. A special connecting pin is passed through both apertures, and the tube then rotated until a pin guide tab can be inserted into a base plate elongate groove, making the pin non-rotatable. As the tube continues rotation, a washered head of the pin, which passes over the undersurface of the base plate local to the groove, tightly engages with that undersurface to complete the assembly. A location function is fulfilled in the above assembly, not by means of a countersink, but by a pair of cams of the mounting plate.

It is an object of this invention to provide a more convenient attachment means for articles that are intended to be assembled to make up a light fitting.

According to a first aspect of the present invention there is provided a light fitting comprising, in unassembled form, a base, an illumination means and an elongate support member for attachment to the base and for supporting the illumination means, said elongate support member being provided with at least one headed shank fixing retained or retainable in a shank-receiving aperture in the elongate support member with adjustable depth of retention in said receiving aperture, the fixing being accessible in the assembled and unassembled forms of the light fitting for the purpose of such adjustment, said base having a corresponding mounting point for mounting the elongate support member, the mounting point comprising an aperture (eg a slot) through the base and the aperture comprising:
a) an enlarged first region which allows the head of the retained fixing to pass through the base when the elongate support member and the base are brought together;
b) a second region to receive the shank head, wherein, by adjustment to increase the depth of retention of the shank in the shank-receiving aperture of the elongate support member, the head can be locked into the second region; and the enlarged first region and the second region being in communication with one another to allow passage of the shank between the enlarged first region and the second region whilst capturing the head,
characterized in that
(A) the headed shank fixing comprises (i) a screw, the head thereof being a countersunk head and the second region comprising a countersunk region of the mounting point aperture or (ii) a bolt, the second region comprising a recess that receives the head of the bolt,
(B) said mounting point aperture (68A, 70A) is provided with fixing retention means to act as an impediment to the passage of the shank fixing (74) from the first region (63) of the mounting point aperture (68A, 70A) in the direction of the second region (61), for the purposes of providing resistance to dislocation of the elongate support member (62) from the base (60) during the part of the assembly together of those components preceding adjustment of the fixing (74) to increase its depth of retention in the receiving aperture of the elongate support member (62) to the point where the elongate support member and the base (60) are securely fixed together; and
(C) said retention means is in the form of a resilient protrusion into the displacement pathway to be followed by the fixing (74) in passage thereof between the first region (63) of the mounting point aperture (68A, 70A) and the second region (61) of the mounting point aperture, the resilient protrusion yielding resiliently to the passage of the fixing (74) under manual force when displacing the base (60) and the elongate member (62) one relative to the other to effect that passage but impeding passage in the direction of the first region (63) from the second region (61) in the absence of that manual force.

The mounting point aperture may include a threshold such as a channel region, narrower than the head, that allows the shank to pass along whilst capturing the head; and

Applicable to all embodiments of the invention, the elongate support is mounted to the base when the head is locked in the second region, but the head is movable therefrom to the enlarged first region, when not so locked, eg for the purposes of disassembly of the light fitting, an unlocked condition being achievable by adjustment of the fixing(s) to decrease the depth of retention thereof in the receiving aperture in the elongate support.

The mounting point aperture is conveniently provided with fixing retention means to act as an impediment to the passage of the shank fixing from the second region of the mounting point aperture in the direction of the enlarged first region, for the purposes of providing a union of the base and the elongate support member together prior to adjustment of the fixing to increase its depth of retention in the receiving aperture of the elongate support member to the point where the elongate support member and the base are securely fixed together.

The retention means referred to in the immediately preceding paragraph are conveniently in the form of a resilient intrusion into the displacement pathway to be followed by the fixing in passage thereof between the enlarged first region of the mounting point aperture and the second region of the mounting point aperture, the resilient intrusion yielding resiliently to the passage of the fixing under manual force when displacing the base and the elongate member one relative to the other to effect that passage but impeding passage in the reverse direction.

The resilient intrusion again yields resiliently when, during disassembly of the light fitting, the elongate support member and the base are manually displaced one relative to the other in order to pass the fixing from the second region to the enlarged first region of the mounting point.

Embodiments of the invention therefore provide a simple and convenient means for a consumer to assemble components of a light fitting, by having one or more components pre-assembled with fixings used to fix separate elements together being pre-installed in an element and incorporating a quick retention system for securely fastening the elements together without the need to manipulate individual fixings into place. Pre-assembly in this manner decreases the time and effort required by a consumer to assemble a light fitting. By providing a slot of the form described in the immediately preceding paragraph, the fixing, pre-installed into the elongate support, can be easily captured within the slot and fastened into the second region relatively much more easily than if the fixing was not pre-installed. In some embodiments the headed shank fixing comprises a screw, the head is a countersunk head, and the second region is a countersunk region of the slotted hole.

Such screws are very commonplace and hence understood by most people. Also, it is likely that most people will have suitable tools, such as a screwdriver for proving the final tightening of the screw into place into the second region.

In some embodiments, the headed shank fixing comprises a bolt, and the second region comprises a recess that receives the head of the bolt. In such embodiments, the recess in the second region is preferably sufficient to enable the head of the fixing to lie flush with a surface of the base, and will also have clearance around the head of the bolt to allow a tool, such as a socket, to access the head as it is fully tightened.

In some embodiments at least two headed shank fixings are installed in the elongate support member, having a fixed spacing therebetween, and a corresponding number of slots are provided in the base, each arranged to receive a respective headed shank fixing, with the respective enlarged first regions and second regions being separated by the same fixed spacing. This allows the at least two fixings to be inserted together, into their respective slots, and passed along the slots to the home position, where the heads are aligned with the second regions before being tightened to pull the head into the second region to lock it, and the elongate support member, into place.

The use of multiple fixings acting together like this provides for a more secure attachment between the base and the elongate member.

Of course, there may be further elongate members that attach to the base, where each elongate member has one or more headed shank fixings arranged to couple to corresponding slots in the base. Thus, the light fitting may comprise of a base with at least one, but in some cases with two or more, elongate members extending away from the base.

In those embodiments wherein the elongate member has at least two headed shank fixings, then the respective corresponding slots may be linear, parallel slots. They may be in-line with each other. In this case, after insertion of the heads of the headed shank fixings into the enlarged first regions of the slots, a linear movement of the elongate member in relation to the base is performed to move the elongate member into its final position.

Alternatively, the two slots may together form part of the circumference of a circle. In this case, after insertion of the heads of the headed shank fixings into the enlarged first regions of the slots, a rotational movement of the elongate member in relation to the base is performed to move the elongate member into its final position.

In some embodiments, the elongate support member has the at least one headed shank fixing partially fastened thereinto at a production stage, such as in a factory prior to sale to an end user or consumer. This pre-assembly of the fixings makes it more convenient for a consumer when they are assembling such an embodiment. Furthermore, there is no need to enclose in the product packaging a separate quantity of fixings, which can be easily miscounted or lost at a packaging state within the factory or at a later stage. There is also a reduced risk of damage to the elongate member due to incorrect insertion of the fixing into the member.

Of course, in some embodiments the at least one headed shank fixing may be arranged to be partially fastened into the elongate support member during installation of the light fitting, e.g. by a consumer or end user. This may suit some consumers, or may be more convenient during a packaging process when the fitting is being packaged in a factory.

In some embodiments the elongate support member comprises an elongate element and wherein the at least one headed shank fixing is located in an end part thereof. Thus, when fitted to the base the elongate member will tend to extend away from the base. The elongate member may be straight, or may be curved, depending on the style and design of the light fitting.

In some embodiments, the elongate support member is, when mounted and fully fastened, generally perpendicular to the base. It may be arranged to sit fully perpendicularly, or may be arranged to be slightly off-perpendicular, depending on the design of the light fitting. Of course, in some embodiments the elongate member(s) may be arranged to sit at an acute angle away from the perpendicular, again depending on the design of the fitting.

In some embodiments, the light fitting may be arranged to sit on the floor or, for example, on a table top. In these embodiments the base will generally be in contact with the floor or table top.

In other embodiments, the light fitting may be arranged to be mounted on a wall or ceiling. In these embodiments, the base may act as a mounting point for one or more elongate members. The base may be attachable or attached, when installed, to a wall or ceiling, or may be arranged to stand off from the wall or ceiling by means of one or more elongate members.

The base and elongate member may be made from any suitable material, in other words one which (1) supports working to form the receiving aperture in the elongate member and the formation of the regions referred to at a), b) and c) above and, in general, (2) also supports repetitive assembly and disassembly of the light fitting. The material may for example comprise timber such as hardwood, engineered timber or a timber-based material, or may be metallic, glass, stone, stone composite, ceramic, polymer, concrete, glass or resin. Preferred are metallic materials (for example, mild steel, A2 or other stainless steel or other iron alloy, aluminium, aluminium alloy, zinc alloy or brass). They may each comprise the same, or different materials, or may each be compound materials, comprising of more than one basic material, such as a combined wood and metal product, or a wood and glass product.

According to a second aspect of the invention there is provided a method for installing a light fitting, the light fitting comprising a fitting as above, and comprising at least one elongate support member having the at least one headed shank fixing retained therein, and a base for attachment thereto, comprising the steps of
i) bringing the elongate support member to the base, and passing the head of the fixing through the enlarged first region of the slot or other mounting point aperture;
ii) moving the elongate support member relative to the base to slide the head along the channel so that the head rests in the second region;
iii) adjusting the headed shank fixing to increase its depth of retention to lock the base in place against the elongate support member.

The method provides for a convenient means of assembly of a light fitting by a consumer, with reduced use of tools such as a screwdriver, spanner, socket, hex key or the like.

Embodiments of the invention will now be described, by way of example only, with reference to the accompanying drawings, in which:

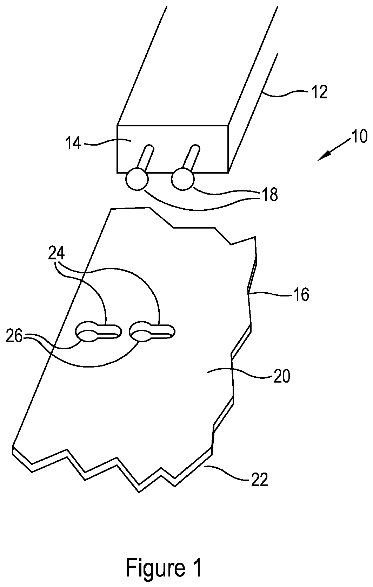

Figure 1 shows in the context of one embodiment, and in this case diagrammatically, the configuration of a light fitting according to the invention at the junction between the base and lower extremity of the elongate support, the base and elongate member shown separated in order to expose detail which would not be seen in the assembled light fitting, including a pair of screws depicted in the figure inserted into the elongate member;

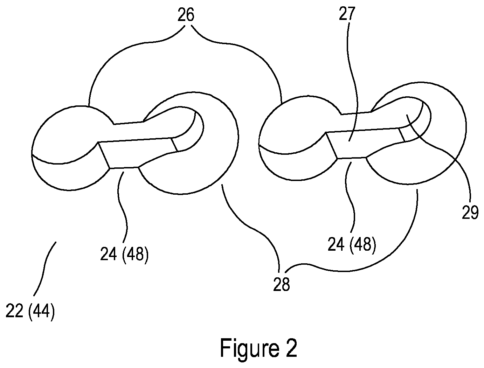

Figure 2 shows (non-diagrammatically) the underside of a base 16, the base 16 broadly as shown, although only diagrammatically, in Figure 1 (which latter figure shows the base as viewed from its top side, designated by reference numeral 20 in Figure 1) showing detail of a slot arrangement in the base according to one particular embodiment of the invention;

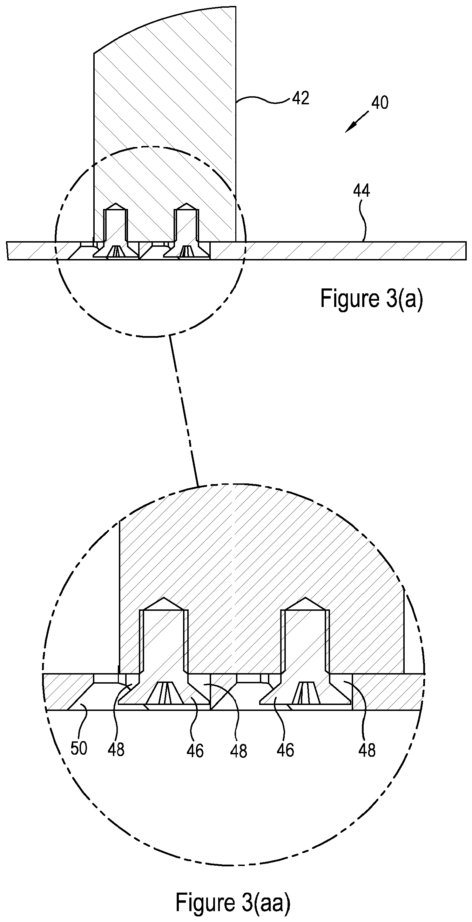

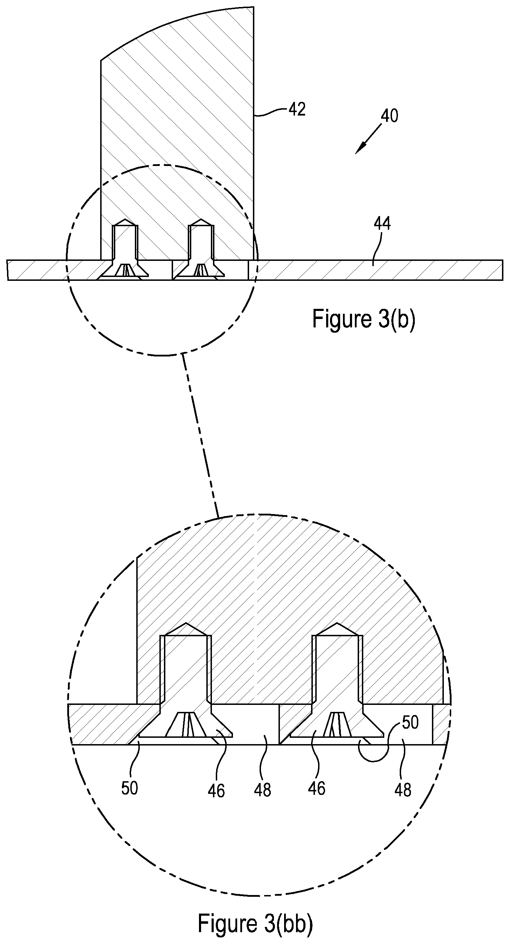

Figures 3(a) and 3(b) (and Figures 3(aa) and 3(bb) which show on an enlarged scale a detail of the respective mother figure) are cross-sections through a base similar to that shown in Figure 2 but in which the threshold between the enlarged and indented regions is reduced so that the shanks of the fixings suffer a smaller displacement in passage between these two regions, both of Figures 3(a) and 3(a) showing the slot in the base and a pair of screw fixings, an elongate member for carrying an illumination device such as a bulb-and- bulb-holder or an array thereof being shown in part and the two figures as a whole showing different stages of assembly. In this regard, Figure 3(a) shows fixings attached to the elongate member having been inserted into slot enlarged regions in the base (an "insert" position), and Figure 3(b) showing the elongate member having been displaced in order to pass the fixing heads to the indented region (a "home" position);

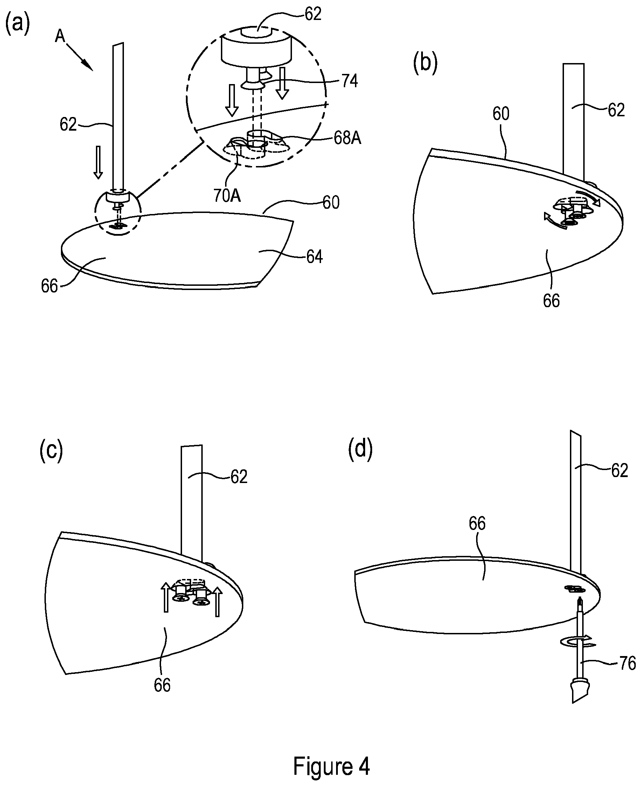

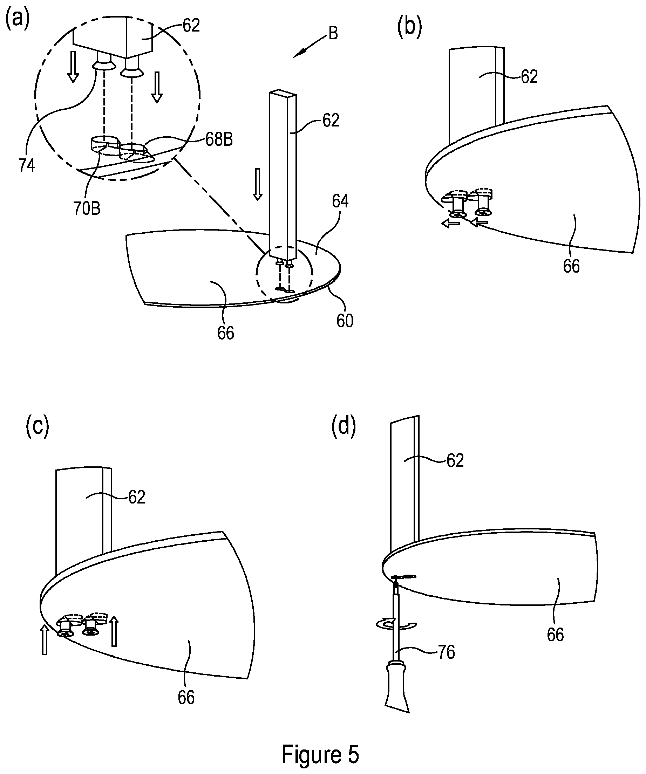

Figures 4 and 5 show various stages in assembly of an elongate member to a base to form an assembled light fitting according to, in the case of Figure 4, an Embodiment A of the invention and, in the case of Figure 5, an Embodiment B of the present invention;

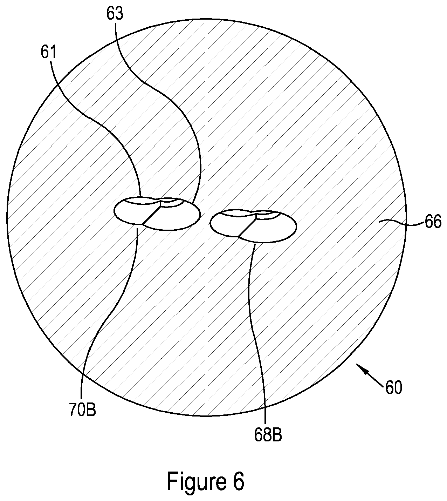

Figure 6 shows, from a similar perspective as in Figure 2, a detail of the slot arrangement in the base according to a further particular embodiment of the invention, the slot arrangement being one designed to be suitable for use in Embodiment B referred to above, and the threshold between the enlarged and indented slot regions being essentially a line of junction so as to minimize the displacement suffered by the fixings in passage between those two slot regions; and

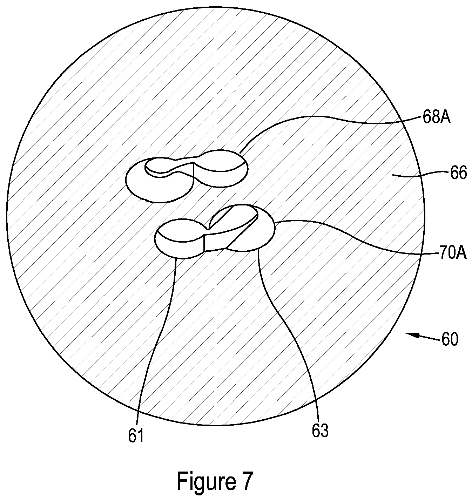

Figure 7 shows, from the same perspective as in Figure 6, a detail of the slot arrangement in the base according to a still further particular embodiment of the invention, the slot arrangement being one designed to be suitable for use in Embodiment A referred to above - however, the threshold between the enlarged and indented slot regions is exaggerated as compared to the embodiment shown in Figure 6, resulting in a shorter passage of the fixing between those two regions (for the purposes of the invention, in general terms, arrangements in which the length of the passage between the two regions is minimized are preferred).

Figure 1 shows elements of a light fitting 10 according to an embodiment of the present invention. An elongate member or standard 12 comprises a stem having an end face 14 for interfacing with the upwardly facing surface 20 of a base 16 when the standard 12 is fixed to the base. The stem is used for supporting a light unit such as a light bulb or assembly of plural light bulbs, although the latter is not shown in the figure. Located in the end face 14 of the member 12 are two headed shank fixings 18, which comprise countersunk-head screws. The screws have been screwed into the elongate member leaving a small length outstanding, and may be adjusted by rotating the screws in the usual fashion to increase (or decrease) the depth of retention.

The base 16 comprises a flat plate made from a metallic material such as previously herein exemplified (for example, A304 austenitic stainless steel, or a lesser grade of stainless steel alloy such as ferritic stainless steel, or brushed or polished aluminum) or, although not as shown in the embodiment depicted in the accompanying drawings, may be made of a non-metallic material such as hereinbefore exemplified. The base 16 has a thickness, at least local to the site of the fixings 18 which is at least slightly greater than the depth of the countersink bevel part of the countersunk screws 18. The base has two opposed faces 20, 22, with the face 20 that is intended to be in contact with the elongate member 12, when assembled, shown uppermost in the figure.

In the base16, two in-line slots 24 are arranged to receive and capture the screws 18. The slots 24 each have a region 26 of enlarged diameter for initial reception of the heads of the screws and serving to provide in each case a clearance hole, sized to allow the heads of the screws 18 to pass through the thickness of the base 16 to the other side of the base 16. The enlarged regions 26 are thus sized to allow the screw head to pass through the base. The enlarged diameter regions 26 have a spacing therebetween equal to that of the spacing between the two screws 18, so permitting both of the screws to be inserted into the enlarged regions 26 of the slots 24 simultaneously.

Figure 2 shows a more detailed view of slots shown in Figure 1 at the face 22 at the underside of the base 16, components common to Figures 1 and 2 being identified by the same reference numerals, supplemented in two instances by further reference numerals linking Figure 2 with later figures. Whilst the embodiment shown in Figure 2 has a distinct channel 27 in the case of each slot 24, that channel may in each case be reduced to a mere threshold between the region 26 of enlarged bore diameter and the respective indented region 28 of the same slot 24 (as described below with reference to Figures 6 and 7).

Thus, this face 22 is on an opposite side to that with which the elongate member is in contact when installed. As noted earlier, the enlarged regions 26 provide respective clearance holes, sized to allow the heads of screws 18 to pass therethrough whereby the standard 12 can be offered up to the base 16 and face 14 thereof brought into interfacial contact with the upwardly facing surface 20 of the base 16 in a first stage of assembly from a flat-pack form of the light fitting (and faces 14 and 20 parted in a disassembly).

At an opposed end of each slot 24 is an indented region 28 in which a countersunk bevel cut in a circular formation about the opening to a central bore 29 is provided to receive the countersunk heads of screws 18, without the heads being able to pass through the base 16 completely. In the case of each slot 24, slide channel 27 connects region 26 of enlarged bore diameter with the indented region 28 of the same slot 24.

The countersink bevel is such as to mirror the countersink of the screws 18 so as enable firm fixture in place of the screws 18. It will be appreciated that, once the head of each screw has been moved to the position of the indented region 28, and the screw depth within the elongate member adjusted (by turning the screw) to increase its depth of retention in the face 14 of standard 12, the screw head will engage with the bevel of the indentation at position 28 and be unable to slide back along the channel 27, and hence will be locked in position. Further tightening of the screw will securely attach the elongate member to the base.

Each channel 27 is slightly wider than the width of a shank region of screw 18 but smaller than the diameter of the head of the screw 18. This enables the screw to be slid from the enlarged region 26 end to the indented region 28, whilst keeping the head of the screw 18 captured.

Figures 3(a) and 3(b) show in cross sectional form both the base 44 and the elongate member 42 of an embodiment 40, in contact with each other. Looking first at Figure 3(a), Figure 3(a) shows fixings 46 attached to the elongate member having been inserted into slot enlarged regions in the base (an "insert" position), the elongate member 42 having pre-installed two machine screws 46, each with a countersunk head.

The base has a pair of slots 48 formed therein, in broadly similar fashion to those shown in Figures 1 and 2. Each slot 48 has an enlarged region (although Figure 2 is in relation to a different embodiment, see for identification purposes reference numeral 26 in the different view shown in that Figure) through which the head of a screw can pass by bringing the base 44 and elongate member 42 together and passing the screw heads into the slots through the base 44 as shown in Figure 3(a), 3(aa). A channel (see reference numeral 27 in Figure 2) extends between the enlarged region in which the countersunk head of the screw is initially received and indented region 50 into which the countersunk head of the screw is disposed for transfer by corresponding displacement one relative to the other of the base 44 and the elongate member 42 until the screw head is seated in the indentation.

As noted earlier, Figure 3(b) shows the elongate member having been displaced in order to have passed the fixing heads to the indented region (a "home" position).

The screws may be pre-installed into the elongate member at the factory, or they may be installed by the user prior to bringing the elongate member and base together. If they are to be user-fitted, this may be accomplished conveniently and speedily without the user having to hold the base in place, as would be the case with a prior art system where screws are passed through conventional holes in a base. This prior art method can be awkward or inconvenient, particularly if the base is heavy, or the elongate member is long, as the holes in the base and elongate member need to be matched up before passing the screw through the base. The present invention allows the pre-installation of the screws as an assembly stage independent from that of attaching the base.

Once the screws in the elongate member have been passed through the enlarged regions of the slots in the base, then the base and/or elongate member can be moved relative to each other to slide the screws along the slots so that the screw heads are in position adjacent the indented region. This is the arrangement shown in Figure 3b. A screwdriver can then be used to tighten each screw to bring the screw head down into the indented region, so locking the relative positions of the base and elongate member.

Fully tightening the screws then makes the components secure against each other. It will be appreciated that, after pre-installation of the screws, the use of the screwdriver in this instance is only required once the base has been effectively hooked onto the elongate member, which holds it in position, so making it more convenient for a user to tighten the screws whilst expending less effort on maintaining the relative positions of the elements whilst simultaneously having to manipulate screws and screwdriver. A consumer who is not used to working with such tools and materials, or one who may be infirm, is thus more able to assemble the light fitting without difficulty.

Figure 4 shows step-by-step assembly of an elongate member to a base in an Embodiment A of the invention. Figure 4(a) shows a base 60 and an elongate member or stem 62 that are required to be attached together as part of a process in assembling a light fitting. The base has a first side 64, shown uppermost here, that is arranged to be in contact with the elongate member when assembled, and a second side 66 that opposes the first side. The base 60 has a pair of slots 68, 70, shown most clearly in the inset detail depiction, that are formed into the base in a curved manner, that matches the circumference of a circle. Each slot has a first end thereof enlarged to allow the head of a screw 74 to pass through, and a second end having an indented region on one side of the base arranged to receive the head of a screw. The indented region of each slot is only visible on the second side 66 of the base 60, and hence is shown as dotted lines in the inset detail image.

The elongate member 62 has two screws retained in an end thereof. These are, at the initial assembly stage, lined up above the slots 68A, 70A of the base 60 as shown. The elongate member 62 is then brought down onto the base, the movement as indicated by the thick arrows of Figure 4(a), with the screw heads passing through the respective enlarged regions of the slots as shown most clearly in Figure 4(b). Once the elongate member 62 is in contact with the base 60 it is then rotated, as indicated by the thick arrows of Figure4(b), with respect to the base, to move each screw along the channel of its respective slot so that the screw heads are aligned with the indented regions of the slots.

Figure 4(c) shows the position of the screws after this rotation, with the heads of the screws lined up with the indented regions of the slots. Each screw may then be adjusted using a screwdriver to increase its depth of retention in the elongate member 62, so that the head passes into the indented region of the slot, so preventing the screw from sliding back along the slot, and then further tightened to lock the elongate member to the base, as shown in Figure 4(d).

The staged assembly of the Embodiment B of the invention shown in Figure 5, in which slots 68A and 70A shown for Embodiment A in Figure 4 (arranged for displacement of the screws 74 in the plane of base 60 by a rotational or twisting of the standard 62) are replaced by slots 68B and 70B (arranged for displacement of the screws 74 in the plane of base 60 by a linear sliding motion of the standard 62), will be readily understood by the skilled person from a reading of the forgoing description of the Embodiment A presented with reference to Figure 4.

As mentioned previously, the slot arrangement shown in Figure 6 is designed to be suitable for use in Embodiment B referred to above whilst that shown in Figure 7 is designed to be suitable for use in Embodiment A referred to above, those figures adopting the same reference numerals as used, respectively, in Figures 5 and 4. It will be appreciated from Figures 5 and 6 that in each case, in assembly (or disassembly) of the base 60 and stalk 62 (see Figures 4 and 5; not shown in Figures 6 and 7) to (from) one another, the headed shank fixings shown in Figures 4 and 5 and designated by reference numeral 74 (but omitted from Figures 6 and 7) each pass between the region 61 of enlarged bore diameter and the indented region 63 of the same slot 68A,70A,68B,70B. Of course, in both assembly and disassembly, the fixing is admissible through the base 60 via the region 61 (which is sized to admit the fixing head) prior to (in the case of assembly) or following (in the case of disassembly) displacement of the fixing to (in the case of assembly) or from (in the case of disassembly) its "home" position in region 63.

As mentioned previously in general terms, the mounting point aperture is conveniently provided with fixing retention means which acts as an impediment to the passage of the shank fixing from the indented region of the mounting point aperture in the direction of the enlarged region, for the purposes of providing a union of the base and the elongate support member together prior to adjustment of the fixing to increase its depth of retention in the receiving aperture of the elongate support member to the point where the elongate support member and the base are securely fixed together.

The retention means according to the invention are in the form of a resilient intrusion into the displacement pathway, conveniently at the point of the threshold, to be followed by the fixing in passage thereof between the enlarged region of the mounting point aperture and the indented region of the mounting point aperture, the resilient intrusion yielding resiliently to the passage of the fixing under manual force when displacing the base and the elongate member one relative to the other to effect that passage but impeding passage in the reverse direction. Such a resilient intrusion may easily, for example, be provided as an integral part of a plastics material base, or of a base made of another material offering resilient deformation. Alternatively, the resilient intrusion could be provided as a body made of a material offering resilient deformation, the body fixed to the base and disposed to act as the impediment to the passage of the shank fixing from the indented region of the mounting point aperture in the direction of the enlarged region. Such an arrangement would be applicable in particular to light fittings having a base made of a metallic material.

A resilient intrusion such as described in the immediately preceding paragraphs will generally best serve its purpose when used together with a large gauge fixing, the larger countersink of which will generally better engage with the intrusion.

In preferred embodiments of the invention it will be common to have plural mounting point apertures, for example a pair of such apertures adjacent one another, the elongate member being provided with fixings correspondingly arranged for compatibility purposes. In conjunction with a resilient intrusion as described above when used in conjunction with a large gauge fixing as above described, it will generally only be necessary that one fixing is impeded in the manner described in order to achieve the desired end result.

The functions described herein as provided by individual components could, where appropriate, be provided by a combination of components instead. Similarly, functions described as provided by a combination of components could, where appropriate, be provided by a single component.

Throughout the description and claims of this specification, the words "comprise" and "contain" and variations of them mean "including but not limited to", and they are not intended to (and do not) exclude other moieties, additives, components, integers or steps.

Features, integers or characteristics, described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive.

## Claims

1. A light fitting comprising, in unassembled form, a base (60), an illumination means and an elongate support member (62) for attachment to the base and for supporting the illumination means,
said elongate support member being provided with at least one headed shank fixing (74) retained or retainable in a shank-receiving aperture in the elongate support member (62) with adjustable depth of retention in said receiving aperture, the fixing being accessible in the assembled and unassembled forms of the light fitting for the purpose of such adjustment,
said base having a corresponding mounting point for mounting the elongate support member (62), the mounting point comprising an aperture (68A, 70A) through the base (60) and the aperture comprising:
a) an enlarged first region (63) which allows the head of the retained fixing (74) to pass through the base (60) when the elongate support member and the base are brought together;
b) a second region (61) to receive the shank head, wherein, by adjustment to increase the depth of retention of the shank in the shank-receiving aperture of the elongate support member (62), the head can be locked into the second region (61);
and
the enlarged first region (63) and the second region (61 being in communication with one another to allow passage of the shank between the enlarged first region (63 and the second region (61 whilst capturing the head, **characterized in that**:
(A) the headed shank fixing (74) comprises (i) a screw, the head thereof being a countersunk head and the second region (61) comprising a countersunk region of the mounting point aperture (68A, 70A) or (ii) a bolt, the second region (61) comprising a recess that receives the head of the bolt (74), and
(B) said mounting point aperture (68A, 70A) is provided with fixing retention means to act as an impediment to the passage of the shank fixing (74) from the first region (63) of the mounting point aperture (68A, 70A) in the direction of the second region (61), for the purposes of providing resistance to dislocation of the elongate support member (62) from the base (60) during the part of the assembly together of those components preceding adjustment of the fixing (74) to increase its depth of retention in the receiving aperture of the elongate support member (62) to the point where the elongate support member and the base (60) are securely fixed together; and
(C) said retention means is in the form of a resilient protrusion into the displacement pathway to be followed by the fixing (74) in passage thereof between the first region (63) of the mounting point aperture (68A, 70A) and the second region (61) of the mounting point aperture, the resilient protrusion yielding resiliently to the passage of the fixing (74) under manual force when displacing the base (60) and the elongate member (62) one relative to the other to effect that passage but impeding passage in the direction of the first region (63) from the second region (61) in the absence of that manual force.

2. A light fitting as claimed in Claim 1 wherein a channel extends between the enlarged first region (63) and the second region (61) to allow said passage of the shank (74) between the enlarged first and second regions.

3. A light fitting as claimed in Claim 1 wherein the enlarged first (63) and second (61) regions are adjacent one another at a line of junction which serves as a threshold across which the shank (74) has passage enabling it to be displaced between the first and second regions (63, 61) whilst capturing the head.

4. A light fitting as claimed in any one of Claims 1 to 3 wherein at least two headed shank fixings (74) are installed in the elongate support member (62), having a fixed spacing therebetween, and a corresponding number of mounting point apertures (68A, 70A) are provided in the base (60), each to receive a respective headed shank fixing (74), with the respective first and second regions being separated by the same fixed spacing.

5. A light fitting as claimed in claim 4 wherein (i) said mounting point apertures (68 A, 70A) are linear, parallel, or in-line apertures or (ii) said mounting point apertures together form part of the circumference of a circle.

6. A light fitting as claimed in any preceding claim wherein (i) the elongate support member (62) has the at least one headed shank (74) fixing partially fastened thereinto at a production stage or (ii) the at least one headed shank fixing is arranged to be partially fastened into the elongate support member (62) during installation of the light fitting.

7. A light fitting as claimed in any preceding claim wherein the elongate support member (62) comprises an elongate element and wherein the at least one headed shank fixing (74) is located in an end or terminal part thereof.

8. A light fitting as claimed in any preceding claim wherein the elongate support member (62) is, when mounted to the base (60) this, generally orthogonal to the base.

9. A method for installing a light fitting, the light fitting comprising a fitting as claimed in any preceding claim and comprising at least one elongate support member (62) having the at least one headed shank fixing (74) retained therein, and a base (60) for attachment thereto, comprising the steps of:
i) bringing the elongate support member (62) and the base together, and passing the head of the fixing (74) through the first region (63) of the mounting point aperture(68A, 70A);
ii) moving the elongate support member (62) relative to the base (60) to slide the head so that the head rests in the second region (61);
i) adjusting the headed shank fixing to increase its depth of retention to lock the base (60) in place against the elongate support member (62).

10. A light fitting which is the assembled form of any unassembled light fitting claimed in any one of Claims 1 to 8 or which is the product of a method as claimed in Claim 9.

## Patentansprüche

1. Leuchte, umfassend, in nicht zusammengebauter Form, eine Basis (60), ein Beleuchtungsmittel und ein längliches Stützelement (62) zur Anbringung an der Basis und zum Stützen des Beleuchtungsmittels,
wobei das längliche Stützelement mit mindestens einer Kopfschaftbefestigung (74) versehen ist, die in einer Schaftaufnahmeöffnung in dem länglichen Stützelement (62) mit einstellbarer Haltetiefe in der Aufnahmeöffnung gehalten wird oder gehalten werden kann, wobei die Befestigung in der zusammengebauten und nicht zusammengebauten Form der Leuchte zum Zwecke einer solchen Einstellung zugänglich ist,
wobei die Basis einen entsprechenden Montagepunkt zum Montieren des länglichen Stützelements (62) aufweist, wobei der Montagepunkt eine Öffnung (68A, 70A) durch die Basis (60) umfasst und die Öffnung Folgendes umfasst:
a) einen vergrößerten ersten Bereich (63), der es dem Kopf der gehaltenen Befestigung (74) ermöglicht, durch die Basis (60) hindurchzutreten, wenn das längliche Stützelement und die Basis zusammengebracht werden;
b) einen zweiten Bereich (61) zum Aufnehmen des Schaftkopfs, wobei der Kopf durch Einstellen, um die Haltetiefe des Schafts in der Schaftaufnahmeöffnung des länglichen Stützelements (62) zu erhöhen, in den zweiten Bereich (61) verriegelt werden kann; und
wobei der vergrößerte erste Bereich (63) und der zweite Bereich (61) miteinander in Verbindung stehen, um den Durchgang des Schafts zwischen dem vergrößerten ersten Bereich (63) und dem zweiten Bereich (61) zu ermöglichen, während der Kopf ergriffen wird, **dadurch gekennzeichnet, dass**:
(A) die Kopfschaftbefestigung (74) (i) eine Schraube, wobei der Kopf davon ein Senkkopf ist und der zweite Bereich (61) einen Senkbereich der Montagepunktöffnung (68A, 70A) umfasst, oder (ii) einen Bolzen, wobei der zweite Bereich (61) eine Ausnehmung umfasst, die den Kopf des Bolzens (74) aufnimmt, umfasst und
(B) die Montagepunktöffnung (68A, 70A) mit Befestigungshaltemitteln versehen ist, um als Hindernis für den Durchgang der Schaftbefestigung (74) von dem ersten Bereich (63) der Montagepunktöffnung (68A, 70A) in der Richtung des zweiten Bereichs (61) zu wirken, mit dem Ziel, einen Widerstand gegen eine Verschiebung des länglichen Stützelements (62) von der Basis (60) während des Teils des Zusammenbaus zusammen mit jenen Komponenten vor der Einstellung der Befestigung (74) bereitzustellen, um seine Haltetiefe in der Aufnahmeöffnung des länglichen Stützelements (62) bis zu dem Punkt zu erhöhen, an dem das längliche Stützelement und die Basis (60) sicher aneinander befestigt sind; und
(C) das Haltemittel in Form eines elastischen Vorsprungs in den Verschiebeweg vorliegt, der von der Befestigung (74) beim Durchgang davon zwischen dem ersten Bereich (63) der Montagepunktöffnung (68A, 70A) und dem zweiten Bereich (61) der Montagepunktöffnung gefolgt werden soll, wobei der elastische Vorsprung beim Verschieben der Basis (60) und des länglichen Elements (62) relativ zueinander elastisch dem Durchgang der Befestigung (74) unter manueller Kraft nachgibt, um diesen Durchgang zu bewirken, aber den Durchgang in der Richtung des ersten Bereichs (63) vom zweiten Bereich (61) beim Fehlen dieser manuellen Kraft behindert.

2. Leuchte nach Anspruch 1, wobei sich ein Kanal zwischen dem vergrößerten ersten Bereich (63) und dem zweiten Bereich (61) erstreckt, um den Durchgang des Schafts (74) zwischen dem vergrößerten ersten und dem zweiten Bereich zu ermöglichen.

3. Leuchte nach Anspruch 1, wobei der vergrößerte erste (63) und der zweite (61) Bereich an einer Verbindungslinie aneinander angrenzen, die als Schwelle dient, über die der Schaft (74) einen Durchgang aufweist, der es ihm ermöglicht, zwischen dem ersten und dem zweiten Bereich (63, 61) verschoben zu werden, während der Kopf ergriffen wird.

4. Leuchte nach einem der Ansprüche 1 bis 3, wobei mindestens zwei Kopfschaftbefestigungen (74) in dem länglichen Stützelement (62) mit einem festen Abstand dazwischen installiert sind und eine entsprechende Anzahl von Montagepunktöffnungen (68A, 70A) in der Basis (60) bereitgestellt sind, die jeweils eine jeweilige Kopfschaftbefestigung (74) aufnehmen, wobei der jeweilige erste und zweite Bereich durch den gleichen festen Abstand getrennt sind.

5. Leuchte nach Anspruch 4, wobei (i) die Montagepunktöffnungen (68A, 70A) lineare, parallele oder In-line-Öffnungen sind oder (ii) die Montagepunktöffnungen zusammen einen Teil des Umfangs eines Kreises bilden.

6. Leuchte nach einem vorhergehenden Anspruch, wobei (i) bei dem länglichen Stützelement (62) die mindestens eine Kopfschaftbefestigung (74) teilweise darin in einer Produktionsphase befestigt ist oder (ii) die mindestens eine Kopfschaftbefestigung angeordnet ist, um während der Installation der Leuchte teilweise in das längliche Stützelement (62) befestigt zu werden.

7. Leuchte nach einem vorhergehenden Anspruch, wobei das längliche Stützelement (62) ein längliches Element umfasst und wobei sich die mindestens eine Kopfschaftbefestigung (74) in einem End- oder Abschlussteil davon befindet.

8. Leuchte nach einem vorhergehenden Anspruch, wobei das längliche Stützelement (62), wenn es an der Basis (60) montiert ist, im Allgemeinen orthogonal zu der Basis ist.

9. Verfahren zum Installieren einer Leuchte, wobei die Leuchte eine Lampenarmatur nach einem vorhergehenden Anspruch umfasst und mindestens ein längliches Stützelement (62), in dem die mindestens eine Kopfschaftbefestigung (74) gehalten wird, und eine Basis (60) zur Befestigung daran umfasst, umfassend die Schritte:
i) Zusammenbringen des länglichen Stützelements (62) und der Basis und Hindurchtreten des Kopfs der Befestigung (74) durch den ersten Bereich (63) der Montagepunktöffnung (68A, 70A);
ii) Bewegen des länglichen Stützelements (62) relativ zu der Basis (60), um den Kopf zu schieben, so dass der Kopf in dem zweiten Bereich (61) ruht;
i) Einstellen der Kopfschaftbefestigung, um ihre Haltetiefe zu erhöhen, um die Basis (60) an Ort und Stelle gegen das längliche Stützelement (62) zu verriegeln.

10. Leuchte, die die zusammengebaute Form einer nicht zusammengebauten Leuchte nach einem der Ansprüche 1 bis 8 ist oder die das Produkt eines Verfahrens nach Anspruch 9 ist.

## Revendications

1. Luminaire comprenant, sous forme non assemblée, une base (60), un moyen d'éclairage et un élément de support allongé (62) pour ancrage à la base et destiné à supporter le moyen d'éclairage,
ledit élément de support allongé étant pourvu d'au moins une fixation de tige à tête (74) retenue ou pouvant être retenue dans une ouverture de réception de tige dans l'élément de support allongé (62) avec une profondeur de retenue réglable dans ladite ouverture de réception, la fixation étant accessible dans les formes assemblées et non assemblées du luminaire aux fins d'un tel réglage,
ladite base présentant un point de montage correspondant destiné à monter l'élément de support allongé (62), le point de montage comprenant une ouverture (68A, 70A) à travers la base (60) et l'ouverture comprenant :
a) une première région élargie (63) qui permet à la tête de la fixation retenue (74) de passer à travers la base (60) lorsque l'élément de support allongé et la base sont rapprochés l'un de l'autre ;
b) une seconde région (61) pour recevoir la tête de tige, dans lequel la tête peut être verrouillée dans la seconde région (61) par réglage de manière à augmenter la profondeur de retenue de la tige dans l'ouverture de réception de tige de l'élément de support allongé (62) ; et
la première région élargie (63) et la seconde région (61) étant en communication l'une avec l'autre pour permettre le passage de la tige entre la première région élargie (63) et la seconde région (61) tout en capturant la tête, **caractérisé en ce que** :
(A) la fixation de tige à tête (74) comprend (i) une vis, la tête de celle-ci étant une tête fraisée et la seconde région (61) comprenant une région fraisée de l'ouverture de point de montage (68A, 70A) ou (ii) un boulon, la seconde région (61) comprenant un évidement qui reçoit la tête du boulon (74), et
(B) ladite ouverture de point de montage (68A, 70A) est pourvue d'un moyen de retenue de fixation pour servir d'obstacle au passage de la fixation de tige (74) de la première région (63) de l'ouverture de point de montage (68A, 70A) en direction de la seconde région (61), aux fins de fournir une résistance à la dislocation de l'élément de support allongé (62) à partir de la base (60) pendant la partie de l'assemblage de ces composants précédant le réglage de la fixation (74) pour augmenter sa profondeur de retenue dans l'ouverture de réception de l'élément de support allongé (62) au point où l'élément de support allongé et la base (60) sont solidement fixés l'un à l'autre ; et
(C) ledit moyen de retenue se présente sous la forme d'une saillie élastique dans le trajet de déplacement à suivre par la fixation (74) lors de son passage entre la première région (63) de l'ouverture de point de montage (68A, 70A) et la seconde région (61) de l'ouverture de point de montage, la saillie élastique cédant élastiquement au passage de la fixation (74) sous une force manuelle lors du déplacement de la base (60) et de l'élément allongé (62) l'un par rapport à l'autre pour effectuer ce passage mais empêchant le passage en direction de la première région (63) à partir de la seconde région (61) en l'absence de cette force manuelle.

2. Luminaire selon la revendication 1, dans lequel un canal s'étend entre la première région élargie (63) et la seconde région (61) pour permettre ledit passage de la tige (74) entre la première région élargie et la seconde région.

3. Luminaire selon la revendication 1, dans lequel la première région élargie (63) et la seconde région (61) sont adjacentes l'une à l'autre au niveau d'une ligne de jonction qui sert de seuil à travers lequel la tige (74) dispose d'un passage lui permettant d'être déplacée entre les première et seconde régions (63, 61) tout en capturant la tête.

4. Luminaire selon l'une quelconque des revendications 1 à 3, dans lequel au moins deux fixations de tige à tête (74) sont installées dans l'élément de support allongé (62), présentant un espacement fixe entre elles, et un nombre correspondant d'ouvertures de point de montage (68A, 70A) sont prévues dans la base (60), chacune pour recevoir une fixation de tige à tête respective (74), les première et seconde régions respectives étant séparées par le même espacement fixe.

5. Dispositif d'éclairage selon la revendication 4, dans lequel (i) lesdites ouvertures de point de montage (68A, 70A) sont des ouvertures linéaires, parallèles ou en ligne ou (ii) lesdites ouvertures de point de montage forment ensemble une partie de la circonférence d'un cercle.

6. Luminaire selon une quelconque revendication précédente, dans lequel (i) l'élément de support allongé (62) présente l'au moins une fixation de tige à tête (74) partiellement attachée dans celui-ci à une étape de production ou (ii) l'au moins une fixation de tige à tête est agencée de manière à être partiellement attachée dans l'élément de support allongé (62) pendant l'installation du luminaire.

7. Luminaire selon une quelconque revendication précédente, dans lequel l'élément de support allongé (62) comprend un article allongé et dans lequel l'au moins une fixation de tige à tête (74) est située dans une extrémité ou une partie terminale de celui-ci.

8. Luminaire selon une quelconque revendication précédente, dans lequel l'élément de support allongé (62) est, lorsqu'il est monté sur la base (60) ainsi, généralement orthogonal à la base.

9. Procédé d'installation d'un luminaire, le luminaire comprenant un luminaire selon une quelconque revendication précédente et comprenant au moins un élément de support allongé (62) présentant l'au moins une fixation de tige à tête (74) retenue à l'intérieur de celui-ci, et une base (60) pour ancrage à celle-ci, comprenant les étapes suivantes :
i) le rapprochement de l'élément de support allongé (62) et de la base, et le passage de la tête de la fixation (74) à travers la première région (63) de l'ouverture de point de montage (68A, 70A) ;
ii) le déplacement de l'élément de support allongé (62) par rapport à la base (60) pour faire coulisser la tête de sorte que la tête repose dans la seconde région (61) ;
i) le réglage de la fixation de tige à tête pour augmenter sa profondeur de rétention afin de verrouiller la base (60) en place contre l'élément de support allongé (62).

10. Luminaire qui est la forme assemblée de tout luminaire non assemblé selon l'une quelconque des revendications 1 à 8 ou qui est le produit d'un procédé selon la revendication 9.
